(19) Europäisches Patentamt

European Patent Office

Office européen des brevets

(11) Veröffentlichungsnummer: **0 226 864 B1**

(12) **EUROPÄISCHE PATENTSCHRIFT**

(45) Veröffentlichungstag der Patentschrift: **28.10.92**

(21) Anmeldenummer: **86116501.7**

(22) Anmeldetag: **27.11.86**

(51) Int. Cl.⁵: **H02K 5/22,** F04D 29/64

(54) **Axialventilator und Verfahren zu seinem Zusammenbau.**

(30) Priorität: **20.12.85 DE 3545299**

(43) Veröffentlichungstag der Anmeldung:
**01.07.87 Patentblatt 87/27**

(45) Bekanntmachung des Hinweises auf die
Patenterteilung:
**28.10.92 Patentblatt 92/44**

(84) Benannte Vertragsstaaten:
**AT BE CH DE FR GB IT LI LU NL SE**

(56) Entgegenhaltungen:
**FR-A- 1 583 878**
**FR-A- 2 387 532**
**GB-A- 2 048 381**
**US-A- 3 310 698**

(73) Patentinhaber: **MAICO ELEKTROAPPARATE-FABRIK GmbH**
**Steinbeisstrasse 20**
**W-7730 Villingen-Schwenningen(DE)**

(72) Erfinder: **Zeissig, Rolf, Ing. (grad.)**
**Staufenstrasse 60**
**W-7730 Villingen-Schwenningen(DE)**
Erfinder: **Vosseler, Richard, Techn. Ang.**
**Immenhofstrasse 4**
**W-7737 Bad Dürrheim 6(DE)**

(74) Vertreter: **Gleiss, Alf-Olav, Dipl.-Ing. et al**
**Patentanwaltskanzlei Gleiss & Grosse Silber-burgstrasse 187**
**W-7000 Stuttgart 1(DE)**

## Beschreibung

Die Erfindung betrifft einen Axialventilator gemäß dem Oberbegriff des Anspruches 1 und ein Verfahren zu seinem Zusammenbau.

Bei Axialventilatoren, auf die sich die Erfindung bezieht, kann es sich insbesondere um Axialventilatoren nicht sehr großer Leistung von vorzugsweise max. 500 Watt handeln, wie sie in Wohn- und Bürogebäuden, Gaststätten und dergleichen zur Lüftung von Räumen verwendet werden, in denen sich Personen aufhalten können, vorzugsweise um Fensterventilatoren, Wandventilatoren, Unterputzventilatoren, Rohrventilatoren und Dachventilatoren. Jedoch ist die Erfindung auch bei anderen Axialventilatoren anwendbar, auch bei solchen mit Leistungen von über 500 Watt. Bevorzugt ist die Erfindung für Axialventilatoren vorgesehen, die in größeren Stückzahlen hergestellt werden und bei denen deshalb erwünscht ist, ihren Zusammenbau möglichst stark zu automatisieren.

Bei von der Anmelderin hergestellten Axialventilatoren erforderte bisher die Herstellung der elektrischen Verbindung zwischen der Wicklung des Stators und den räumlich vom Motor am Ventilatorgehäuse angeordneten Anschlußklemmen erhebliche Zeit in Anspruch nehmende Handarbeit. Diese Handarbeit wird besonders zeitaufwendig und schwierig dann, wenn von dem Motorgehäuse noch eine gewisse Dichtheit, bspw. Schutz gegen Spritzwasser, verlangt wird, denn dann können die elektrischen Verbindungsleitungen von der Wicklung zu den Anschlußklemmen wegen der geforderten Dichtheit des Motorgehäuses nur durch Durchbrüche und Bohrungen hindurch verlegt werden, was auch schwierige Fügearbeiten erfordert. Die Verlegung der elektrischen Verbindungsleitungen stellt deshalb bisher einen erheblichen Kostenfaktor dar und erfordert auch gut eingelernte, geübte Arbeitskräfte. Auch besteht bei der Handarbeit Fehlergefahr.

Aus der FR-A-2 387 532 ist ein Axialventilator der eingangs genannten Art bekannt, dessen Motorgehäuse mittels Streben mit einem Rahmen verbunden ist. Die vom Motor stammenden Anschlußleitungen sind durch eine der Streben hindurchgeführt und an Anschlußklemmen angeschlossen, die sich im Motorgehäuse befinden. Beim Zusammenbau dieses Axialventilators ist es daher erforderlich, nach Einbau des Motors die elektrischen Verbindungen in die Strebe einzulegen und dann die elektrischen Anschlußklemmen zu montieren.

Aus der GB-A-2 048 381 ist ein Ventilator bekannt, dessen Elektromotor in ein Motorgehäuse eingeschoben wird, wobei an einem Fortsatz des Elektromotors Anschlußkontakte angeordnet sind, die mit der Motorwicklung in Verbindung stehen. Beim Einbringen des Motors in das Motorgehäuse treten die Anschlußkontakte mit Gegenkontakten in Verbindung, die mit elektrischen Anschlußleitungen verbunden sind. Die Anschlußleitungen verlaufen frei sichtbar durch den Luftförderkanal des Ventilatorgehäuses.

Aus der FR-A-1 583 878 ist ein elektrischer Ventilator bekannt, der einen Motortragrahmen aufweist, von dem ein Motorgehäuse tragende Streben ausgehen. Die elektrischen Anschlußleitungen des Motors verlaufen durch die Streben und sind an Steckkontakte angeschlossen, die beim Befestigen des Motortragrahmens an ein Gehäuse mit Gegenkontakten in Kontakt treten. Die Gegenkontakte sind mit einer elektrischen Anschlußleitung verbunden. Bei der Herstellung ist nach einer Motormontage eine Verlegung der Motordrähte bis zu den Kontakten an dem Motortragrahmen erforderlich.

Es ist deshalb eine Aufgabe der Erfindung, einen Axialventilator der im Oberbegriff des Anspruches 1 genannten Art zu schaffen, bei dessen Zusammenbau die Herstellung der elektrischen Verbindung zwischen der Motorwicklung und den Anschlußklemmen leicht und rasch möglich ist.

Diese Aufgabe wird erfindungsgemäß durch einen Axialventilator gemäß Anspruch 1 gelöst. Ein erfindungsgemäßes Verfahren zum Zusammenbau eines solchen Axialventilators ist in Anspruch 10 beschrieben.

Indem die elektrische Verbindung zwischen der Motorwicklung und den Anschlußklemmen die Kontaktstifte und die durch sie kontaktierten Motor- und Gegenkontakte aufweist, läßt sich ihre Herstellung beim Zusammenbau des Axialventilators automatisieren.

Die Motorkontakte können von Hand oder selbsttätig am Stator angeordnet und mit den betreffenden Drahtenden der Statorwicklung, beispielsweise kraftschlüssig, durch Löten oder auf sonstige Weise verbunden werden. Die Kontaktstifte können problemlos manuell oder selbsttätig in die Streben eingefügt werden oder in sie mit eingespritzt werden.

Die Gegenkontakte können problemlos manuell oder selbsttätig am Ventilatorgehäuse angebracht und mit den Anschlußkontakten verbunden werden. Beim Zusammenbau des Axialventilators kommen dann die elektrischen Verbindungen zwischen den Kontaktstiften und den Motor- und Gegenkontakten problemlos selbsttätig zustande. Die Gegenkontakte und vorzugsweise auch die Anschlußklemmen sind in einem Innenraum des Rahmens angeordnet, so daß sie gegen Berührung hierdurch geschützt sind, und auch problemlos gegen Spritzwasser, störende Verschmutzung oder dergleichen geschützt sind. Bevorzugt können sie an einer an einer Wand des Rahmens anbringbaren Leiterplatte angeordnet sein.

2

Die Erfindung ermöglicht insbesondere auch dann die selbsttätige Herstellung der elektrischen Verbindungen zwischen dem Motor und den Anschlußklemmen, wenn das Motorgehäuse nach außen abgedichtet ist und es so den Motor gegen Umwelteinflüsse wie Spritzwasser, Schmutz und dergl., abkapselt.

Bei dem Motor kann es sich vorzugsweise um einen Kurzschlußläufermotor handeln. Der Motor kann ferner vorzugsweise einphasig sein und keinen Schutzleiteranschluß benötigen, so daß für ihn nur zwei Kontaktstifte benötigt werden.

Vorzugsweise kann jeder Kontaktstift in einer nur ihm zugeordneten Strebe angeordnet sein. Es ist jedoch auch möglich, in mindestens einer Strebe mindestens zwei Kontaktstifte anzuordnen.

In der Zeichnung sind Ausführungsbeispiele der Erfindung dargestellt. Es zeigen:

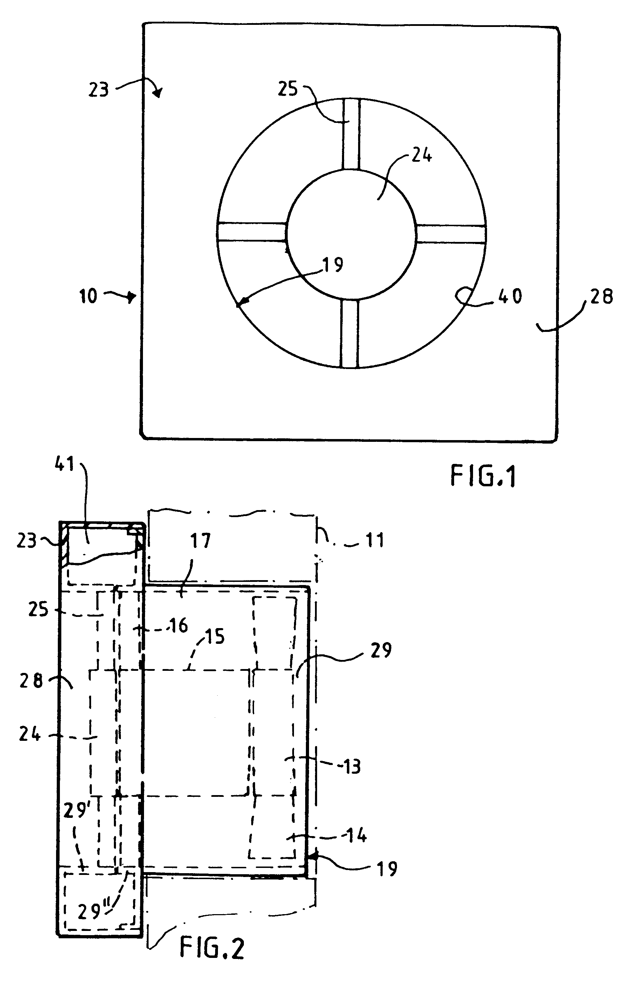

Fig. 1 eine Frontansicht eines Axialventilators gemäß einem Ausführungsbeispiel der Erfindung,

Fig. 2 eine Seitenansicht des Axialventilators nach Fig. 1 in teilweise geschnittener Darstellung,

Fig. 3 eine explodierte Seitenansicht des Axialventilators nach Fig. 1 und 2 in teilweise geschnittener Darstellung,

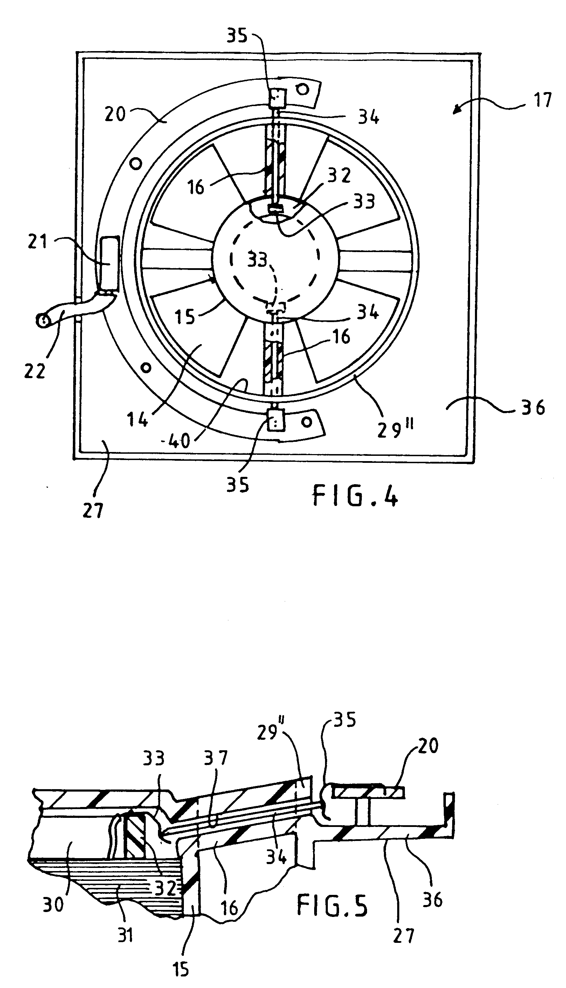

Fig. 4 eine Vorderansicht des Gehäusehauptteiles des Ventilatorgehäuses des Axialventilators nach den Fig. 1 bis 3,

Fig. 5 eine Variante einer Einzelheit des Axialventilators nach den Fig. 1 bis 4 in geschnittener, vergrößerter Darstellung.

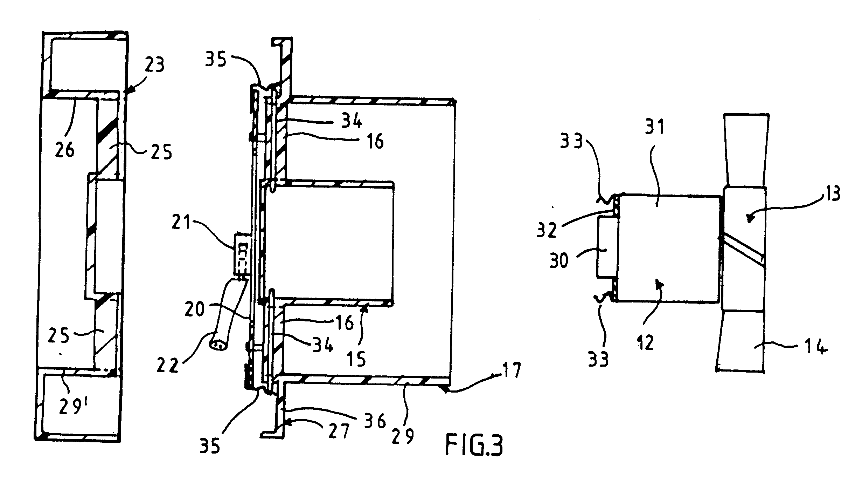

Der in der Zeichnung dargestellte Axialventilator 10 kann vorzugsweise einen Wandventilator bilden, der wie in Fig. 2 strichpunktiert angedeutet in einen Durchbruch einer Wand 11 eines Gebäudes oder dergl, eingesetzt werden kann und dem Lüften des betreffenden Gebäuderaumes dient. Er kann jedoch auch irgendwelche andere geeignete Ausbildung aufweisen, bspw. zum Einsetzen in ein Fenster, Dach oder dergl..

Dieser Axialventilator 10 weist einen Elektromotor 12, vorzugsweise einen Kurzschlußläufermotor, auf, auf dessen Läuferwelle ein Flügelrad 13 befestigt ist, das der Förderung der Luft dienende Flügel 14 aufweist. Dieser Motor 12 ist in ein Motorgehäuse 15 eingesetzt, das vollständig oder weitgehend nach außen abgedichtet ist, so daß der Motor 12 gegen Spritzwasser, Regenwasser und dergl. geschützt ist.

Das Motorgehäuse 15 ist mittels vier radialen Streben 16 an dem Gehäusehauptteil 17 eines Ventilatorgehäuses 19 angeordnet. Dieses Gehäusehauptteil 17 weist ein Rahmenteil 27 und einen Rohrstutzen 29 auf. Das Rahmenteil 27 trägt eine Leiterplatte 20, an der die Motoranschlußklemmen 21 zum Anschluß eines elektrischen Kabels 22 in größerem Abstand vom Motor 12 befestigt sind. An dieses Gehäusehauptteil 17 ist ein Frontteil 23 des Ventilatorgehäuses 19 angesetzt, das eine mittlere Scheibe 24 aufweist, die mittels Streben 25 an einem quadratischen Rahmenteil 26 gehalten sind. Diese Streben 25 liegen direkt vor den Streben 16 des Gehäusehauptteiles 17.

Das Gehäusehauptteil 17 weist das schmale quadratische Rahmenteil 27 auf, das formschlüssig und ggfs. kraftschlüssig an das Rahmenteil 26 angesetzt ist und zusammen mit ihm einen hohlen, ringförmigen Rahmen 28 bildet, in dessen Innenraum 41 die Anschlußklemmen 21 und die Leiterplatte 20 angeordnet sind. Die Innenumfangswandteile 29', 29" der Rahmenteile 26, 27 bilden einen Abschnitt des Luftkanales 40 dieses Axialventilators 10, der auf dem größten Teil seiner Länge durch einen an das Rahmenteil 27 einstückig mit angespritzten Rohrstutzen 29 gebildet ist. Das Rahmenteil 27 trägt mittels der Streben 16 das Motorgehäuse 15. Der Rohrstutzen 29 bildet eine Verlängerung des runden, axialen Innenumfangswandteiles 29". Das Motorgehäuse 15 und das Flügelrad 13 befinden sich innerhalb des Luftkanales 40.

Um bei dem Zusammenbau der in Fig. 3 in explodierter Darstellung gezeigten Teile dieses Axialventilators 10 die elektrische Verbindung zwischen dem Motor 12 und den Anschlußklemmen 21 selbsttätig, d. h. mittels automatischer Einrichtungen und damit ohne manuelle Mitwirkung vornehmen zu können, sind hier folgende Maßnahmen vorgesehen:

Auf einen rückwärtigen Vorsprung 30 des Motors 12, in dem eines der Lager der Läuferwelle angeordnet ist und das zum Stator 31 gleichachsig ist, jedoch kleineren Durchmesser als der Stator aufweist, ist ein Kunststoffring 32 reibungs- und formschlüssig aufgeschoben, an dem an zueinander diametralen Stellen als Motorkontakte 33 zwei federnde Kontaktbleche angeordnet sind, an die die Drahtanschlußenden der Wicklung des Stators 31 angeschlossen sind, bspw. angeklemmt, angelötet oder auf sonstige Weise, was ebenfalls in einer vorangegegangenen Fertigungsstufe automatisch vorgenommen werden kann, oder welcher elektrische Anschluß auch selbsttätig beim Aufschieben des Ringes 32 auf den Vorsprung 30 stattfinden kann, indem bspw. die Wicklung an zwei fest am Stator angeordnete Kontakte angeschlossen ist, die beim Aufschieben des Ringes 32 mit den beiden Kontaktblechen 33 in kraftschlüssigen, elektrischen Kontakt kommen.

In diesem Auführungsbeispiel ist in zwei zueinander diametrale Streben 16, die das Gehäusehauptteil 17 mit dem Motorgehäuse 15 verbinden, je ein metallischer Kontaktstift 34 fest eingesetzt. Diese Kontaktstifte 34 ragen mit ihren einen Enden in den Innenraum des Motorgehäuses 15 etwas hinein und mit ihren anderen Enden etwas über den Rohrstutzen 29 hinaus.

Der Gehäusehauptteil 17, die Streben 16 und das Motorgehäuse 15 können zusammen ein einstückiges Teil aus vorzugsweise thermoplastischem Kunststoff bilden. Es ist möglich, die Kontaktstifte 34 beim Spritzen dieses Bauteiles in die Streben 16 mit einzuspritzen. Es ist auch möglich, diese Kontaktstifte 34 in die Streben 16 nachträglich, bspw. unter Erwärmung durch Ultraschall einzusetzen, indem diese Erwärmung des Kontaktstiftes das thermoplastische Material bei seinem Hineindrücken in die Streben 16 soweit aufschmilzt, daß die Kontaktstifte 34 die Streben 16 durchdringen können und nach Beendigung des Einsetzens erstarrt das die Kontaktstifte 34 umgebende thermoplastische Material wieder.

Diese Kontaktstifte bestehen aus elektrisch gut leitendem Metall, wie Messing oder dergl..

An zwei Randbereichen der Leiterplatte 20 ist je ein als federndes Kontaktblech ausgebildeter Gegenkontakt 35 so angeordnet, daß das eine Kontaktblech 35 beim Zusammenbau der Teile in Kontakt mit dem betrefffenden freien Ende des einen Kontaktstiftes 34 und das andere Kontaktblech 35 mit dem entsprechenden freien Ende des anderen Kontaktstiftes 34 in kraftschlüssigen Kontakt kommt, so daß beide Kontaktbleche 35 dann ständig durch ihre Eigenfederung an diese Kontaktstiftenden angedrückt sind. Die Leiterplatte 20 ist zu diesem Zweck an der radialen Wand 36 des Gehäusehauptteiles 17 im Abstand von ihr befestigt, bspw. auf Haltezapfen aufgesteckt, angeschraubt oder dergl.

Es ist selbsttätiges oder manuelles Ansetzen der Leiterplatte 20 an das Gehäusehauptteil 17 mit minimalem Zeitaufwand möglich, da sich die elektrischen Verbindungen der Kontaktbleche 35 mit den Kontaktstiften 34 dabei von selbst ergeben und nicht von Hand vorgenommen werden müssen.

Diese beiden Kontaktbleche 35 sind mittels an der Leiterplatte 20 befindlichen Leiterbahnen mit den zugeordneten elektrischen Anschlußklemmen 21 elektrisch verbunden. Die Montage dieser Anschlüßklemmen 21 und der Kontaktbleche 35 auf der Leiterplatte 20 kann problemlos selbsttätig vorgenommen werden.

In diesem Auführungsbeispiel benötigt der Motor 12, weil er ein einphasiger Wechselstrommotor ist, nur zwei Anschlußkontakte und keinen Schutzleiter. Wenn ein drei Anschlußklemmen benötigender Motor, bspw. ein Drehstrommotor vorgesehen ist, wird eine dritte elektrische Verbindung zwischen der Wicklung und der dann vorhandenen dritten Anschlußklemme in gleicher Weise wie für die beiden anderen elektrischen Verbindungen hergestellt, indem in eine dritte Strebe 16 des Gehäusehauptteiles 15 ein dritter Anschlußkontaktstift eingesetzt ist und an dem Ring 32 und der Leiterplatte 20 ihm zugeordnete als dritte Motor- und Gegenkontakte dienende Kontaktbleche angeordnet werden.

Der Zusammenbau dieses Axialventilators 10 kann wie folgt erfolgen:
Auf den Motor 12 wird der Ring 32 aufgeschoben und die Wicklung elektrisch mit den an ihm angeordneten Kontaktblechen 33 verbunden, was vorzugsweise selbsttätig durchgeführt werden kann.

Am Gehäusehauptteil 17 wird die Leiterplatte 20 befestigt und hierdurch die elektrische Verbindung zwischen den an ihr angeordneten Kontaktblechen 35 und den Kontaktstiften 34 selbsttätig hergestellt. Der Motor 12 mit montiertem Flügelrad 13 wird in das Motorgehäuse 15 eingeschoben, wobei selbsttätig die elektrische Verbindung zwischen jedem der beiden Kontaktbleche 33 und den zugeordneten Kontaktstiften 34 zustande kommt, so daß nunmehr die Motorwicklung elektrisch an die Anschlußklemmen 21 angeschlossen ist. An die Anschlußklemmen wird das elektrische Anschlußkabel 22 angeschlossen und dann wird das Frontteil 23 an dem Gehäusehauptteil 17 befestigt. Damit ist der Zusammenbau beendet.

Die Motor- und Gegenkontakte 33, 35 können auch auf andere Weise am Motor 12 bzw. Ventilatorgehäuse 19 angeordnet werden. Bspw. können die Motorkontakte 33 direkt an dem Vorsprung 30 oder Stator 31 gegen ihn elektrisch isoliert befestigt sein. Oder die Gegenkontakte 35 und Anschlußklemmen 21 können unter Fortfall der Leiterplatte 20 direkt an dem Gehäusehauptteil 17 befestigt sein.

Anstatt der federnden Kontaktbleche 33 und/oder 35 können oft zweckmäßig auch starre Motor- bzw. Gegenkontakte vorgesehen sein und zu ihrer sicheren Kontaktierung können die Kontaktstifte 34 aus elastisch federndem Metall, bspw. aus federnder Bronze hergestellt sein, so daß ebenfalls sicherer, kraftschlüssiger Kontakt selbsttätig beim Zusammenbau des Axialventilators zustande kommt.

Anstatt die Kontaktstifte 34 an den Streben 16 unbeweglich zu halten,kann auch vorgesehen sein,daß sie in Durchgangsbohrungen der Streben 16 axial beweglich eingesetzt werden, wie es an einem Ausführungsbeispiel in Fig. 5 für einen einzelnen Kontaktstift dargestellt ist. Hier ist in der Strebe 16 ein durchgehender Kanal 37 vorhanden, in den der Kontaktstift 34 mit Gleitlagerspiel oder auch ggf. mit größerem Seitenspiel eingesetzt ist. Dieser Kontaktstift 34 liegt mit seinem einen Ende am federnden Kontaktblech 33 des Motors 12 und mit seinem anderen Ende an dem an der Leiterplatte 20 befestigten federnden Kontaktblech 35 an. Diese beiden Kontaktbleche können auch so ausgebildet sein, daß sie den Kontaktstift 34 zentriert halten, bspw. hierfür Löcher, Schlitze oder Einbuchtungen aufweisen, in die die freien Enden des starren Kontaktstiftes 34 formschlüssig eingreifen. Es kann auch vorgesehen sein, die Kontaktbleche 33 oder die Kontaktbleche 35 durch unbewegliche, starre Kontakte zu ersetzen, vorzugsweise an dem Ring 32 unbewegliche Motorkontakte anzuordnen, an die die Kontaktstifte 34 durch die federnden Kontaktbleche 35 angedrückt werden oder die sie ggf. auf andere Weise kontaktieren. Bspw. kann oft zweckmäßig auch vorgesehen sein, die Kontaktstifte 34 in Gewindebohrungen der Motorkontakte einzuschrauben oder die Motorkontakte als Buchsen oder Steckerstifte auszubilden und die Kontaktstifte in Art einer Steckverbindung in sie einzustecken bzw. auf sie in Art von Buchsen aufzustecken.

Der Zusammenbau kann im Falle axial beweglicher Kontaktstifte 34 vorzugsweise dadurch erfolgen, daß zuerst der Motor 12 in das Motorgehäuse 15 eingesetzt und dann erst die Kontaktstifte 34 in die Streben 16 eingesetzt werden, und danach die Leiterplatte 20 an dem Gehäusehauptteil befestigt wird. Anschließend wird wieder das Frontteil 23 befestigt.

Der gesamte beschriebene Zusammenbau des Axialventilators ist selbsttätig möglich.

## Patentansprüche

1. Axialventilator (10) mit einem hohlen Rahmen (28), welcher ein einen Elektromotor (12) enthaltendes Motorgehäuse (15) und ein auf einer Läuferwelle des Motors (12) angeordnetes Flügelrad des Axialventilators trägt, indem das Motorgehäuse (15) mittels Streben (16) mit dem Rahmen (28) verbunden ist und am oder im Rahmen (28) elektrische Anschlußklemmen (21) für den Motor (12) angeordnet sind, von denen elektrische Verbindungsmittel in das Motorgehäuse (15) zur Wicklung des Motors (12) führen, wobei die Verbindungsmittel mindestens eine der Streben durchsetzen, dadurch gekennzeichnet, daß für eine beim Zusammenbau selbsttätig erfolgende elektrische Verbindung die Wicklung des Motors (12) an vom Motor (12) getragene elektrische Motorkontakte (33) angeschlossen ist und jeder Motorkontakt (33) durch einen Kontaktstift (34) kontaktiert ist, der durch eine Strebe (16) hindurch in den Innenraum (41) des Rahmens (28) ragt und hier einen Gegenkontakt (35) kontaktiert, der an eine der Anschlußklemmen (21) elektrisch angeschlossen ist.

2. Axialventilator nach Anspruch 1, dadurch gekennzeichnet, daß mindestens ein Motorkontakt (33) und/oder mindestens ein Gegenkontakt (35) als federndes Kontaktblech ausgebildet ist.

3. Axialventilator nach Anspruch 1 oder 2, dadurch gekennzeichnet, daß mindestens ein Motorkontakt (33) und/oder mindestens ein Gegenkontakt (35) ein unbeweglicher Kontakt ist, an den der betreffende Kontaktstift (34) angesetzt, vorzugsweise unter Federwirkung angedrückt ist.

4. Axialventilator, nach einem der vorhergehenden Ansprüche, dadurch gekennzeichnet, daß die Motorkontakte (33) an einem am Stator des Motors (12) angeordneten Kunststoffteil, vorzugsweise an einem auf den Stator aufgeschobenen Kunststoffring (32), angeordnet sind.

5. Axialventilator nach einem der Ansprüche 1 bis 4, dadurch gekennzeichnet, daß in mindestens einer Strebe (16) mindestens zwei Kontaktstifte (34) angeordnet sind.

6. Axialventilator nach einem der vorhergehenden Ansprüche, dadurch gekennzeichnet, daß die Kontaktstifte (34) in der Strebe (16) oder den Streben (16) axial beweglich angeordnet sind.

7. Axialventilator nach einem der Ansprüche 1 bis 5, dadurch gekennzeichnet, daß die Kontaktstifte (34) in der Strebe (16) oder den Streben (16) fest angeordnet sind.

8. Axialventilator nach einem der vorhergehenden Ansprüche, dadurch gekennzeichnet, daß der Rahmen (28) zusammen mit einem an ihm angeordneten Rohrstutzen (29) ein Ventilatorgehäuse (19) bildet, innerhalb dessen Luftkanal (40) das Motorgehäuse (15) mit Motor (12) und das Flügelrad (13) angeordnet sind.

9. Axialventilator nach einem der vorhergehenden Ansprüche, dadurch gekennzeichnet, daß die Anschlußklemmen (21) an einer im Rahmen (28) angeordneten Leiterplatte (20) angeordnet sind.

10. Axialventilator nach einem der vorhergehenden Ansprüche, dadurch gekennzeichnet, daß die Gegenkontakte (35) und die Anschlußklemmen (21) an einer Leiterplatte (20) angeordnet werden und die Leiterplatte (20) an einer Innenwand des Ventilatorgehäuses (19) unter Inkontaktkommen der Kontaktstifte (34) mit den Gegenkontakten (35) angeordnet wird.

11. Verfahren zum Zusammenbau eines Axialventilators gemäß einem der Ansprüche 1 bis 10, dadurch gekennzeichnet, daß die elektrischen Verbindungen zwischen den Motorkontakten und den Anschlußklemmen bei Zusammenbau selbsttätig hergestellt werden.

12. Verfahren nach Anspruch 11, dadurch gekennzeichnet, daß die Kontaktstifte in die Strebe oder Streben eingespritzt oder unter Anwendung von Erwärmung eingesetzt werden.

13. Verfahren nach Anspruch 11, dadurch gekennzeichnet, daß die Kontaktstifte nach Einsetzen des Motors in das Motorgehäuse in vorhandene Kanäle der Strebe oder Streben eingesetzt und danach die Gegenkontakte an sie angedrückt werden.

**Claims**

1. An axial fan (10) with a hollow frame (28) which bears both a motor housing (15) containing an electric motor (12) and an axial-fan vane-wheel arranged on a rotor shaft of the motor (12), in that the motor housing (15) is connected to the frame (28) by means of struts (16) and electrical connecting terminals (21) for the motor (12) are arranged on or in the frame (28), electrical connecting means leading from these connecting terminals into the motor housing (15) then to the winding of the motor (12), the connecting means passing through at least one of the struts, characterized in that for automatic electrical connection upon assembly, the winding of the motor (12) is connected to electric motor contacts (33) borne by the motor (12) and each motor contact (33) makes contact with a contact pin (34) which projects through a strut (16) into the interior space (41) of the frame (28) and here makes contact with an opposite contact (35) which is electrically connected to one of the connecting terminals (21).

2. An axial fan in accordance with Claim 1, characterized in that at least one motor contact (33) and/or at least one opposite contact (35) is constructed as a resilient contact-sheet of metal.

3. An axial fan in accordance with Claim 1 or 2, characterized in that at least one motor contact (33) and/or at least one opposite contact (35) is a fixed contact onto which the relevant contact pin (34) is applied, preferably pressed thereagainst through its resilience.

4. An axial fan in accordance with any one of the preceding Claims, characterized in that the motor contacts (33) are arranged on a plastics part arranged on the stator of the motor (12), preferably on a plastics ring (32) slid onto the stator.

5. An axial fan in accordance with any one of Claims 1 to 4, characterized in that in at least one of the struts (16) there are arranged at least two contact pins (34).

6. An axial fan in accordance with any one of the preceding Claims, characterized in that the contact pins (34) are arranged in an axially movable manner in the strut (16) or the struts (16).

7. An axial fan in accordance with any one of Claims 1 to 5, characterized in that the contact pins (34) are arranged in a fixed manner in the strut (16) or the struts (16).

8. An axial fan in accordance with any one of the preceding Claims, characterized in that the frame (28) together with a cylindrical piece (29) arranged thereon forms a fan housing (19) within whose air channel (40) there are arranged the motor housing (15) with motor (12) and the vane wheel (13).

9. An axial fan in accordance with any one of the preceding Claims, characterized in that the connecting terminals (21) are arranged on a printed circuit board (20) arranged in the frame (28).

10. An axial fan in accordance with any one of the preceding Claims, characterized in that the opposite contacts (35) and the connecting terminals (21) are arranged on a printed circuit board (20), and the printed circuit board (20) is arranged on an inside wall of the fan housing (19) with coming into contact of the contact pins (34) and the opposite contacts (35).

11. A process for the assembly of an axial fan in accordance with any one of Claims 1 to 10, characterized in that the electrical connections between the motor contacts and the connecting terminals are produced automatically upon assembly.

12. A process in accordance with Claim 11, characterized in that the contact pins are injection-moulded into the strut or struts or are inserted with the application of heat.

13. A process in accordance with Claim 11, characterized in that the contact pins are — after insertion of the motor into the motor housing —

inserted into channels present in the strut or struts and thereafter the opposite contacts are pressed against these contact pins.

**Revendications**

1. Ventilateur axial (10) avec un châssis creux (28) qui porte un carter de moteur (15) contenant un moteur électrique (12) et une roue à ailettes de ventilateur axial disposée sur un arbre de rotor du moteur (12) tandis que le carter du moteur (15) est relié au châssis (28) au moyen d'entretoises (16) et que des bornes électriques de raccordement (21) pour le moteur (12) sont disposées sur ou dans le châssis (28), bornes à partir desquelles des moyens de liaison électrique dans le carter du moteur (15) mènent à l'enroulement du moteur (12), les moyens de liaison passant à travers au moins l'une des entretoises, ventilateur axial caractérisé en ce que pour une liaison électrique ayant lieu automatiquement lors de l'assemblage, l'enroulement du moteur (12) est raccordé à des contacts électriques du moteur (33) portés par le moteur et chaque contact du moteur (33) est mis en contact avec une broche de contact (34) qui passe à travers une entretoise (16) et pénètre dans l'espace intérieur (41) du châssis (28) et vient en contact à cet endroit avec un contact opposé (35), qui est raccordé électriquement à l'une des bornes de raccordement (24).

2. Ventilateur axial selon la revendication 1, caractérisé en ce qu'au moins un contact du moteur (33) et/ou au moins un contact opposé (35) sont constitués comme des lames de contact élastiques.

3. Ventilateur axial selon la revendication 1 ou 2, caractérisé en ce qu'au moins un contact du moteur (33) et/ou au moins un contact opposé (35) est un contact immobile, sur lequel repose la broche de contact concernée (34), de préférence en étant pressé par l'action d'un ressort.

4. Ventilateur axial, selon l'une des revendications précédentes, caractérisé en ce que les contacts du moteur (33) sont disposés sur une pièce en matière plastique disposée sur le stator du moteur (12), de préférence sur une bague en matière plastique (32) enfilée sur le stator.

5. Ventilateur axial selon l'une des revendications 1 à 4, caractérisé en ce que dans au moins une entretoise (16) sont disposées au moins deux broches de contact (34).

6. Ventilateur axial selon l'une des revendications précédentes, caractérisé en ce que les broches de contact (34) sont disposées dans l'entretoise (16) ou les entretoises (16) de façon mobile axialement.

7. Ventilateur axial selon l'une des revendications 1 à 5, caractérisé en ce que les broches de contact (34) sont disposées de façon fixe dans l'entretoise (16) ou dans les entretoises (16).

8. Ventilateur axial selon l'une des revendications précédentes, caractérisé en ce que le châssis (28) forme en même temps qu'une tubulure (29) disposée sur lui un carter de ventilateur (19), à l'intérieur duquel un canal d'air (40), le carter du moteur (15) avec le moteur (12) et la roue à ailettes (13) sont disposés.

9. Ventilateur axial selon l'une des revendications précédentes, caractérisé en ce que les bornes de raccordement (21) sont disposées sur une carte imprimée (20) disposée dans le châssis (28).

10. Ventilateur axial selon l'une des revendications précédentes, caractérisé en ce que les contacts opposés (35) et les bornes de raccordement (21) sont disposées sur une carte-imprimée (20) et la carte imprimée (20) est disposée sur une paroi intérieure du carter de ventilateur (19) les broches de contact (34) venant en contact avec les contacts opposés (35).

11. Procédé d'assemblage d'un ventilateur axial selon l'une des revendications 1 à 10, caractérisé en ce que les liaisons électriques entre les contacts du moteur et les bornes de raccordement sont établies automatiquement lors de l'assemblage.

12. Procédé selon la revendication 11, caractérisé en ce que les broches de contact sont mises par injection dans l'entretoise ou dans les entretoises ou sont insérées en utilisant un échauffement.

13. Procédé selon la revendication 11, caractérisé en ce que les broches de contact après l'insertion du moteur dans le carter du moteur sont insérées dans les canaux disponibles de l'entretoise ou des entretoises et ensuite les contacts opposés sont pressés sur elles.

FIG.1

FIG.2

FIG.3

FIG.4

FIG.5